# EUROPEAN PATENT APPLICATION

(11) **EP 4 817 803 A1**
(43) Date of publication of application: **07.10.2026**
(21) Application number: 24897142.6
(22) Date of filing: 21.10.2024
(51) Int. Cl.: B25J 3/00, B25J 13/02, G06F 3/0488, B25J 15/08

(54) **REMOTE CONTROL SYSTEM AND REMOTE CONTROL METHOD**

(30) Priority: 01.12.2023 JP 2023204028
(71) Applicant: Mitsubishi Electric Corporation, Tokyo 100-8310 (JP)
(72) Inventor: HARUNA, Masaki, Tokyo 100-8310 (JP); TAGASHIRA, Shigeaki, Suita-shi, Osaka 564-8680 (JP); OGINO, Masaki, Suita-shi, Osaka 564-8680 (JP)
(74) Representative: Hoffmann Eitle
(86) International application number: PCT/JP2024/037419
(87) International publication number: WO 2025/115452

(57) **Abstract**

A remote control system (100) includes: a robot (1) including a sensor (12); a transparent contact panel (31) that accepts, as an operation on the robot (1), a motion of an operator for causing the robot (1) to perform a motion; a camera (13) that captures a camera image that is an image including an area around the robot (1); a sensor image generation unit (23) that generates, using a detection value detected by the sensor (12), a sensor image according to the detection value; an operation detection unit (21) that detects an operation position that is a position in the camera image corresponding to the operation; a composite image generation unit (24) that determines, based on the operation position, a position at which the sensor image is to be superimposed on the camera image, and generates a composite image by superimposing the sensor image on the camera image at the position determined; and a display (33) that displays the composite image.

## Description

### Field

The present disclosure relates to a remote control system and a remote control method, which are used for remotely controlling an edge device.

### Background

In a remote control system for remotely controlling an edge device such as a robot, it is necessary to notify an operator of a state of the edge device. Patent Literature 1 discloses a remote control system in which a robot has an imaging element, a tactile sensor, and the like installed therein, and an operator wears a head-mounted display and a tactile presentation device. The remote control system disclosed in Patent Literature 1 enables the operator to perform operations intuitively by conveying, to the operator, an image captured by a camera installed in the edge device and conveying, to the operator, a tactile sensation detected by the tactile sensor.

### Citation List

### Patent Literature

Patent Literature 1: WO 2019/225548 A1

### Summary of Invention

### Problem to be solved by the Invention

The technique disclosed in Patent Literature 1 needs to use a tactile presentation device that conveys, to the operator, a tactile sensation detected by the tactile sensor installed in the robot, by a physical force, resulting in an increase in the complexity of the device used by the operator.

The present disclosure has been made in view of the above circumstances, and an object of the present disclosure is to provide a remote control system that enables an operator to perform operations intuitively without increasing the complexity of a device used by the operator.

### Means to Solve the Problem

In order to solve the above-described problems and achieve the object, a remote control system according to the present disclosure includes: an edge device including a sensor; an operation device to accept, as an operation on the edge device, a motion of an operator for causing the edge device to perform a motion; a camera to capture a camera image that is an image including an area around the edge device; a sensor image generation unit to generate, using a detection value detected by the sensor, a sensor image that is an image according to the detection value; an operation detection unit to detect an operation position that is a position in the camera image corresponding to the operation; a composite image generation unit to determine, based on the operation position, a position at which the sensor image is to be superimposed on the camera image, and to generate a composite image by superimposing the sensor image on the camera image at the position determined; and a display device to display the composite image.

### Effects of the Invention

According to the present disclosure, it is possible to achieve an effect of enabling an operator to perform operations intuitively without increasing the complexity of a device used by the operator.

### Brief Description of Drawings

FIG. 1 is a diagram illustrating an exemplary configuration of a remote control system according to a first embodiment.
FIG. 2 is a diagram illustrating examples of appearances of a robot and a terminal device according to the first embodiment.
FIG. 3 is a diagram illustrating an example of an operation of hands according to the first embodiment.
FIG. 4 is a diagram illustrating an example of an attachment position of a sensor according to the first embodiment.
FIG. 5 is a flowchart illustrating an example of processing executed by a control device according to the first embodiment.
FIG. 6 is a diagram illustrating a specific example of a composite image according to the first embodiment.
FIG. 7 is a diagram illustrating a specific example of a composite image according to the first embodiment.
FIG. 8 is a diagram illustrating a specific example of a composite image according to the first embodiment.
FIG. 9 is a diagram illustrating a specific example of a composite image according to the first embodiment.
FIG. 10 is a diagram illustrating a specific example of a composite image according to the first embodiment.
FIG. 11 is a diagram illustrating a specific example of a composite image according to the first embodiment.
FIG. 12 is a diagram illustrating an example of an operable range according to the first embodiment.
FIG. 13 is a diagram illustrating an example of linkage figures according to the first embodiment.
FIG. 14 is a diagram illustrating another example of the linkage figures according to the first embodiment.
FIG. 15 is a diagram illustrating an example of an operation using attachments according to the first embodiment.
FIG. 16 is a diagram illustrating an example of an operation method for independently operating two robot arms according to the first embodiment.
FIG. 17 is a diagram illustrating an example of an operation method for operating two fingers of the hand according to the first embodiment.
FIG. 18 is a diagram illustrating an example of an operation by a gesture according to the first embodiment.
FIG. 19 is a diagram illustrating an example of a composite image when an operation is performed by the gesture according to the first embodiment.
FIG. 20 is a diagram illustrating an exemplary configuration of a computer system that implements the control device according to the first embodiment.
FIG. 21 is a diagram illustrating another exemplary configuration of the remote control system according to the first embodiment.
FIG. 22 is a diagram illustrating an exemplary configuration of a remote control system according to a second embodiment.
FIG. 23 is a diagram illustrating an example of sensor images according to the second embodiment when sensors of the same type are provided at one location.
FIG. 24 is a diagram illustrating an example of sensor images according to the second embodiment when sensors of different types are provided at one location.
FIG. 25 is a diagram illustrating an exemplary configuration of a remote control system according to a third embodiment.
FIG. 26 is a diagram illustrating an example of a composite image according to a fourth embodiment.
FIG. 27 is a diagram illustrating another example of the composite image according to the fourth embodiment.

### Description of Embodiments

Hereinafter, remote control systems and remote control methods according to embodiments will be described in detail with reference to the drawings.

### First Embodiment.

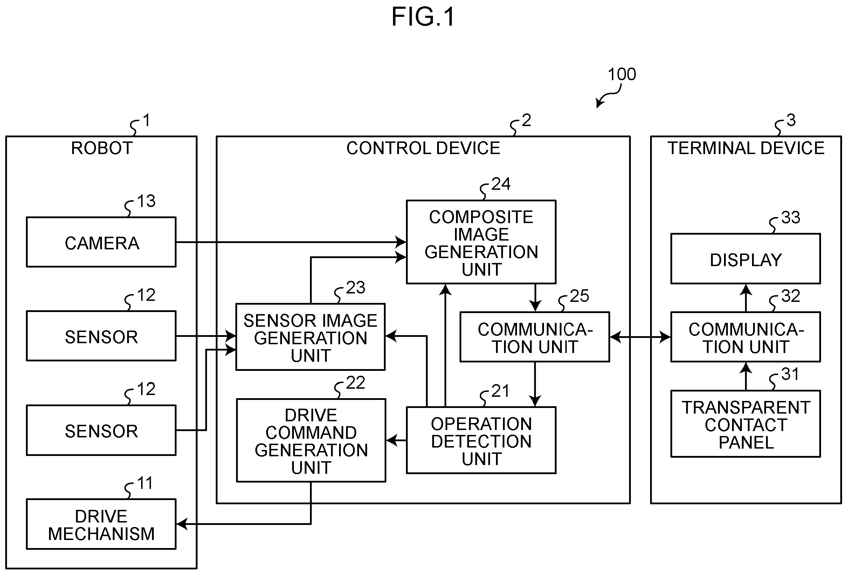

FIG. 1 is a diagram illustrating an exemplary configuration of a remote control system according to a first embodiment. A remote control system 100 according to the present embodiment includes a robot 1, a control device 2, and a terminal device 3. The robot 1 is an example of an edge device. The control device 2 generates an image to be displayed on the terminal device 3. The terminal device 3 is an example of an operation device that accepts an input of an operation for remotely controlling the robot 1. In the remote control system 100, the edge device is a machine (a machine at a remote location) including a drive mechanism and capable of being remotely controlled by the operation of the operation device by an operator. The remote control system 100 is also called, for example, a mixed-haptics teleoperation system, but the name of the remote control system 100 is not limited thereto. Hereinafter, as an example, a description will be given mainly of an example in which the edge device is the robot 1 in which a carriage and a robot arm (manipulator) are combined. However, the edge device may be any device as long as it includes a drive mechanism and is capable of being remotely controlled. Examples of the edge device include, but are not limited to, a movable vehicle, a robot arm, a humanoid robot, an industrial or household machine, and the like.

The robot 1 includes a drive mechanism 11, sensors 12, and a camera 13. Each of the sensors 12 detects at least one of the robot 1 and a state around the robot 1. The camera 13 captures an image including an area around the robot 1. The sensor 12 includes, for example, at least one of a force tactile sensor and a temperature sensor. Hereinafter, a description will be given mainly of an example in which the sensor 12 is a force tactile sensor. However, the sensor 12 is not limited to the force tactile sensor, and may be, for example, a temperature sensor as described above, or may be a pressure sensor, an acceleration sensor, or the like. The sensor 12 may be any sensor as long as it detects non-image information. The sensor 12 outputs, to the control device 2, sensor information indicating a detection result. The sensor information is output, for example, periodically, but the present disclosure is not limited thereto. The sensor 12 may output the sensor information when instructed by the control device 2. Additionally, although FIG. 1 illustrates two sensors 12, the number of sensors 12 may be any number at least one, and the number of sensors 12 is not limited to the example illustrated in FIG. 1.

The drive mechanism 11 includes an actuator that drives a movable part in the robot 1. The drive mechanism 11 causes the robot 1 to perform a motion based on a drive command received from the control device 2. The movable part includes, for example, at least one of a moving mechanism for moving, such as a tire or a crawler, and a work mechanism for performing work, such as a robot arm. The drive mechanism 11 may be integrated with the movable part. The camera 13 outputs, to the control device 2, a camera image that is an image obtained by capturing.

In the present embodiment, the control device 2 converts the sensor information into an image, generates a composite image in which the image is superimposed on the camera image, and transmits the composite image to the terminal device 3. When the terminal device 3 displays the composite image, the operator can perform the operation while checking the composite image. This enables the operator to perform operations intuitively without increasing the complexity of the device used by the operator. For example, it is possible to convey, to the operator, a force tactile sensation detected by the force tactile sensor without using a tactile presentation device or the like that conveys the force tactile sensation to the operator by a physical force.

On the other hand, when generating the composite image, the control device 2 needs to superimpose, at an appropriate position, a sensor image that is an image indicating the sensor information. However, when the control device 2 attempts to analyze the camera image to identify a portion on which the sensor image is to be superimposed, a calculation load increases. For example, in a case in which the sensor 12 is provided at an arm tip of the robot 1, it is desirable that the sensor image is superimposed near the arm tip of the robot 1, and thus, calculation to identify the arm tip from the camera image becomes necessary. Additionally, in a case in which there is an obstacle between the arm tip of the robot 1 and an object to be operated by the robot 1, estimation processing for identifying a portion on which the sensor image is to be superimposed becomes necessary. Thus, the calculation load increases. In the present embodiment, the control device 2 determines a position in the camera image at which the sensor image is to be superimposed, based on a position designated by the operator for operating the robot 1 using the terminal device 3. This can reduce the calculation load for identifying the portion on which the sensor image is to be superimposed while maintaining the intuitive operability of the operator.

The terminal device 3 includes a transparent contact panel 31, a communication unit 32, and a display 33. The display 33 is an example of a display device that displays images such as a camera image and a composite image. The transparent contact panel 31 is an example of an operation device that accepts, as an operation on the robot 1, a motion of the operator for causing the robot 1 to perform a motion, and acquires operation information indicating the accepted operation. The transparent contact panel 31 is integrated with the display 33 and is, for example, stuck onto the display 33. This allows the position on the display 33 and the position on the transparent contact panel 31 to be associated with each other, and the operator to designate a desired position in the image displayed on the display 33 via the transparent contact panel 31. The terminal device 3 is, for example, a smartphone, a tablet, a personal computer with a touch panel, or the like. The terminal device 3 may include a camera.

The communication unit 32 transmits and receives information by communicating with another device. The communication unit 32 communicates with, for example, the control device 2. For example, the communication unit 32 receives, from the control device 2, a composite image to be described later, a camera image, and the like, and outputs the received images to the display 33. The display 33 displays the composite image, the camera image, and the like received from the communication unit 32. The communication unit 32 receives, from the transparent contact panel 31, operation information input by the operator through the operator's touch operation on the transparent contact panel 31, and transmits the received operation information to the control device 2. The operation information includes, for example, position information indicating an operated position (a position on the display 33), that is, a position at which the finger of the operator is brought into contact with the transparent contact panel 31. The operation information may include information indicating the intensity of the pressure received by the transparent contact panel 31.

The control device 2 includes an operation detection unit 21, a drive command generation unit 22, a sensor image generation unit 23, a composite image generation unit 24, and a communication unit 25. The communication unit 25 transmits and receives information by communicating with another device. The communication unit 25 communicates with, for example, the terminal device 3. For example, the communication unit 25 receives, from the terminal device 3, the operation information that the terminal device 3 has accepted from the operator, and outputs the received operation information to the operation detection unit 21. Additionally, the communication unit 25 transmits, to the terminal device 3, the composite image received from the composite image generation unit 24.

The operation detection unit 21 detects, from the input operation information, an operation position. The operation position is a position in the camera image corresponding to the operation. Specifically, the operation detection unit 21 detects, from the operation information received from the communication unit 25, an operation position and a motion instruction (a motion instruction to the robot 1), outputs the motion instruction to the drive command generation unit 22, and when the motion instruction is a motion instruction for a motion for superimposing the sensor image, outputs the operation position to the composite image generation unit 24. For example, the operation detection unit 21 determines, as the operation position, a position in the camera image corresponding to a position indicated by the position information. Specifically, for example, when the position on the transparent contact panel 31 is represented by coordinate values in a coordinate system fixed to the display 33, the coordinate values on the display 33 correspond to coordinate values in the camera image. In this case, the position indicated by the position information in the operation information directly corresponds to the position in the camera image. Examples of the motion instruction include, but are not limited to, an instruction to move the robot 1, an instruction to cause a manipulator of the robot 1 to perform a motion, an instruction to cause a hand (arm tip) of the manipulator to perform a motion, and the like. The motion instruction may be any instruction as long as it is an instruction to cause the movable part in the robot 1 to perform a motion. The motion for superimposing the sensor image (hereinafter, also referred to as a superimposition target motion) corresponds to at least some of all the motion instructions for the robot 1, and is, for example, a motion of a movable part corresponding to the sensor 12, but is not limited thereto. The superimposition target motion will be described later.

The sensor image generation unit 23 generates, using a detection value detected by the sensor 12, a sensor image that is an image according to the detection value. Specifically, the sensor image generation unit 23 converts the sensor information received from the sensor 12 into a sensor image, and outputs the sensor image to the composite image generation unit 24. Although details of the sensor image will be described later, the sensor image is an image whose color, shape, hue, and the like change based on the detection value of the sensor 12.

The composite image generation unit 24 determines, based on the operation position, a position at which the sensor image is to be superimposed on the camera image, and generates a composite image by superimposing the sensor image on the camera image at the position determined. Specifically, the composite image generation unit 24 receives the camera image from the camera 13, and superimposes, based on the operation position received from the operation detection unit 21, the sensor image received from the sensor image generation unit 23 on the camera image, thereby generating a composite image obtained by combining the camera image and the sensor image, and outputs the composite image to the communication unit 25. For example, the composite image generation unit 24 superimposes the sensor image on the camera image such that the sensor image is superimposed at a position including the operation position. Note that, when the sensor image is not superimposed, that is, when the composite image generation unit 24 has not received the operation position from the operation detection unit 21, the composite image generation unit 24 outputs the camera image to the communication unit 25.

The drive command generation unit 22 generates, based on the motion instruction received from the operation detection unit 21, a drive command for causing the robot 1 to perform a motion, and outputs the generated drive command to the drive mechanism 11 of the robot 1. The drive command includes, for example, information indicating the movable part to be caused to perform a motion and a command value indicating an amount by which the movable part is driven. Note that, when the number of movable parts is one, the drive command need not include information indicating the movable part to be caused to perform a motion.

Note that, in the example illustrated in FIG. 1, the information is exchanged between each unit of the robot 1 and each unit of the control device 2. However, the robot 1 may include a communication unit, and the communication unit of the robot 1 may communicate with the communication unit 25 of the control device 2 or a communication unit different from the communication unit 25, thereby conveying information between each unit of the robot 1 and each unit of the control device 2.

When the robot 1 and the terminal device 3 are located away from each other, the control device 2 may be provided in an area where the robot 1 is installed, in an area where the terminal device 3 is located, or in an area different from those of the robot 1 and the terminal device 3. For example, the control device 2 may be implemented by a cloud computer system. Furthermore, the control device 2 may be incorporated into the robot 1 and integrated with the robot 1, or may be incorporated into the terminal device 3 and integrated with the terminal device 3. Additionally, as will be described later, the respective units constituting the control device 2 may be provided in a distributed manner in the robot and the terminal device. Additionally, in FIG. 1, although the drive command generation unit 22 is provided in the control device 2, a drive control device including the drive command generation unit 22 may be provided separately from the control device 2, and the drive command generation unit 22 need not be provided in the control device 2.

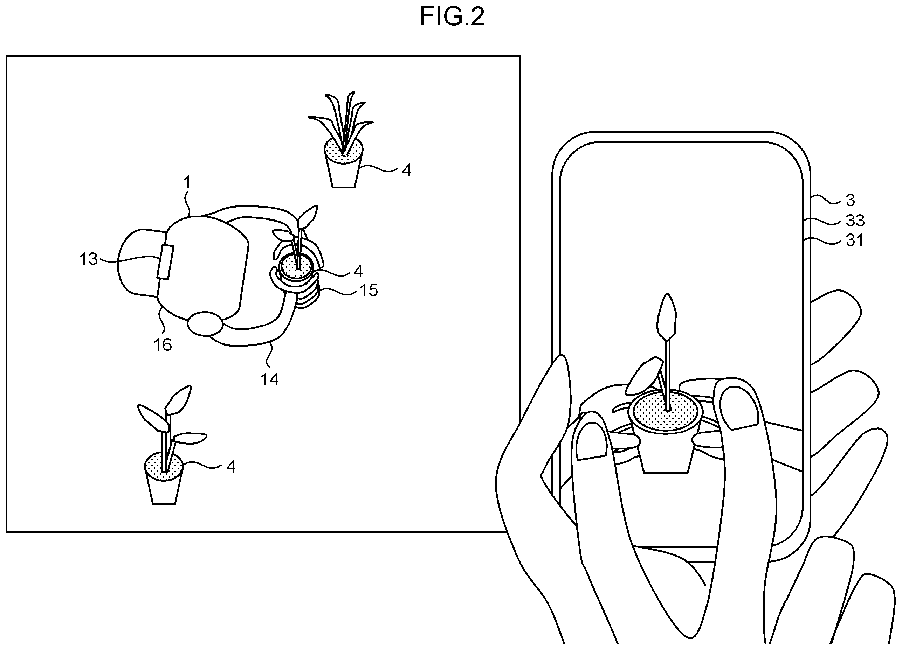

FIG. 2 is a diagram illustrating examples of appearances of the robot 1 and the terminal device 3 according to the present embodiment. In the example illustrated in FIG. 2, the robot 1 includes robot arms 14 and a movable carriage 16. The robot arms 14 each include a hand (arm tip) 15 capable of gripping a target 4. The target 4 is an object to be operated by the robot arms 14. The camera image captured by the camera 13 of the robot 1 is displayed on the display 33 of the terminal device 3. The carriage 16 includes a movable part, such as a wheel or a crawler, that is driven by an actuator such as a motor. As described above, the transparent contact panel 31 is stuck onto the display 33, and the operator can visually recognize the camera image displayed on the display 33 via the transparent contact panel 31.

In the example illustrated in FIG. 2, the operator can input, to the terminal device 3, a motion instruction to move the carriage 16 by operating the transparent contact panel 31, and can also input, to the terminal device 3, a motion instruction to move the hands 15 by operating the transparent contact panel 31. In the example illustrated in FIG. 2, since the robot arms 14 move in linkage with the motion instruction to the hands 15, the motion instruction to the hands 15 also corresponds to an instruction to the robot arms 14. The motion of the robot 1 is not limited to the above example, and the motion of the robot arms 14 as a whole and the motion of the hands 15 may be individually operable.

In the example illustrated in FIG. 2, the operation is performed by fingers of the operator. Additionally, here, it is assumed that, under a predetermined rule for remotely controlling the robot 1, the operator moves one finger on the transparent contact panel 31 when moving the carriage 16, and the operator moves two fingers on the transparent contact panel 31 when causing the hands 15 to grip the target 4. For example, when moving the carriage 16, the operator brings one finger into contact with the transparent contact panel 31 and drags the finger toward the operator. Additionally, the operator may increase the driving force of the carriage 16 by dragging the finger strongly toward the operator or by increasing the dragging speed of the finger toward the operator. In FIG. 2, the operator is attempting to use two fingers to perform an operation for causing the hands 15 of the robot 1 to grip the target 4. Note that the rule for the remote control indicating the association between the motion of the robot 1 and the motion of the operator is not limited to the above example, and any rule may be used.

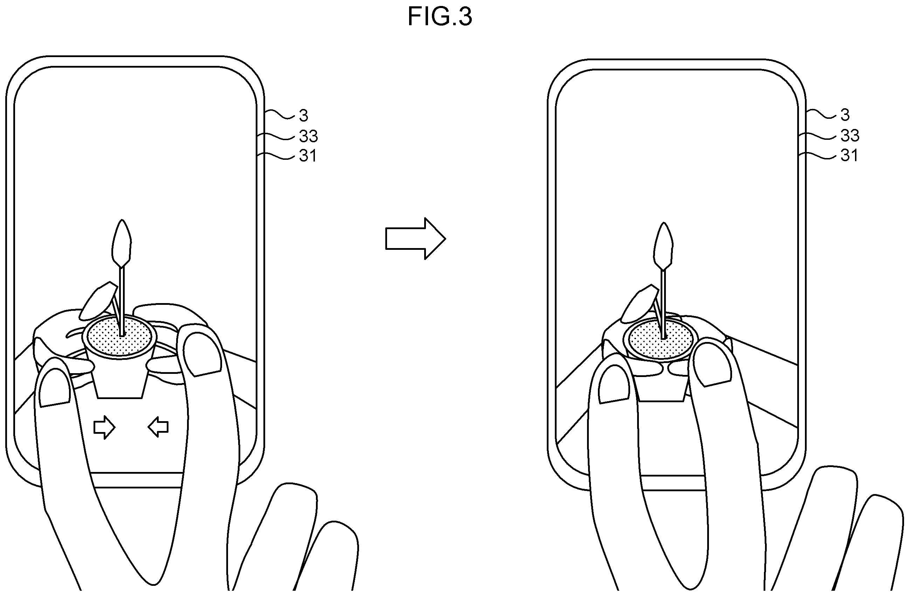

FIG. 3 is a diagram illustrating an example of the operation of the hands 15 according to the present embodiment. As illustrated on the left side of FIG. 3, the operator touches the transparent contact panel 31 by bringing two fingers into contact with the transparent contact panel 31, and brings the two fingers close to each other on the transparent contact panel 31. Consequently, as illustrated on the right side of FIG. 3, the hands 15 of the robot 1 approach the target 4. Specifically, based on the position information included in the operation information, since there are two contact points, the operation detection unit 21 of the control device 2 determines that two fingers are brought into contact with the transparent contact panel 31, and detects that the motion instruction is an instruction to move the hands 15 based on a determination result. The operation detection unit 21 outputs operation positions together with the motion instruction to the drive command generation unit 22. Alternatively, the operation detection unit 21 may determine a movement amount of the hands 15 based on temporal changes of the operation positions, and output the movement amount together with the motion instruction to the drive command generation unit 22. The drive command generation unit 22 determines the movement amount of the hands 15 based on the temporal changes of the operation positions, generates a motion command according to the motion instruction, and causes the robot 1 to perform a motion. In this manner, the robot 1 performs a motion in linkage with the movement of the fingers of the operator. As illustrated in FIGS. 2 and 3, since the camera image is displayed on the display 33 of the terminal device 3, the operator can perform the operation while checking the positions of the hands 15 of the robot 1 and the target 4.

In FIGS. 2 and 3, the camera image on which no sensor image is superimposed is displayed on the display 33. On the other hand, when bringing the hands 15 into contact with the target 4, if the operator can recognize information regarding force tactile sensations, realism increases and operability improves.

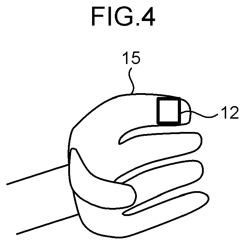

FIG. 4 is a diagram illustrating an example of an attachment position of the sensor 12 according to the present embodiment. In the example illustrated in FIG. 4, the sensor 12, which is the force tactile sensor, is attached to a fingertip of the hand 15. Note that the robot 1 illustrated in FIG. 2 includes two hands 15, and thus, each hand 15 has the sensor 12 attached to a fingertip thereof. In the present embodiment, for example, the force tactile sensor is provided as the sensor 12 at the fingertip of the hand 15, and the control device 2 superimposes the sensor image on the camera image such that the sensor image is displayed on the display 33 near a finger that the operator brings into contact with the transparent contact panel 31 in order to operate the hand 15. Consequently, the operator feels as if the fingers used to operate the hands 15 are linked with the sensor images, and can perform the operation while intuitively feeling the force tactile sensations.

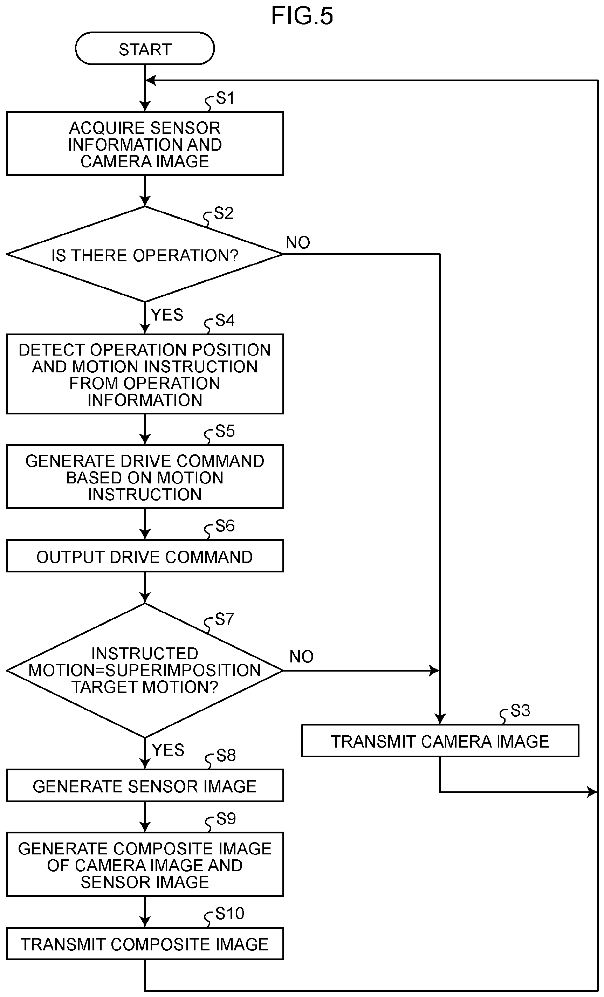

FIG. 5 is a flowchart illustrating an example of processing executed by the control device 2 according to the present embodiment. As illustrated in FIG. 5, the control device 2 acquires a camera image and sensor information (step S1). In detail, the composite image generation unit 24 acquires a camera image from the camera 13, and the sensor image generation unit 23 acquires sensor information from the sensor 12.

Next, the control device 2 determines whether there is an operation (step S2). As described above, the operator operates the robot 1 by bringing the finger into contact with the transparent contact panel 31 of the terminal device 3. Consequently, the transparent contact panel 31 of the terminal device 3 transmits the operation information to the control device 2 via the communication unit 32. Thus, in step S2, in detail, the operation detection unit 21 determines whether the operation information has been received from the terminal device 3 via the communication unit 25.

When there is no operation (No in step S2), the control device 2 transmits the camera image (step S3), and repeats the processing from step S1. In detail, in step S3, the composite image generation unit 24 outputs the camera image to the communication unit 25, and thus, the communication unit 25 transmits the camera image to the terminal device 3. Consequently, the camera image is displayed on the display 33 of the terminal device 3.

When there is an operation (Yes in step S2), the control device 2 detects an operation position and a motion instruction from the operation information (step S4). In detail, the operation detection unit 21 detects an operation position and a motion instruction from the operation information, and outputs the motion instruction to the drive command generation unit 22.

The control device 2 generates a drive command based on the motion instruction (step S5), and outputs the drive command (step S6). In detail, the drive command generation unit 22 generates a drive command for the robot 1 based on the motion instruction received from the operation detection unit 21, and outputs the generated drive command to the drive mechanism 11 of the robot 1.

The control device 2 determines whether the instructed motion is the superimposition target motion (step S7). In detail, the operation detection unit 21 determines whether the detected motion instruction is an instruction for the superimposition target motion. Note that, when all the motions of the robot 1 are the superimposition target motions, step S7 need not be performed.

When the instructed motion is not the superimposition target motion (No in step S7), the control device 2 executes step S3 and repeats the processing from step S1. When the instructed motion is the superimposition target motion (Yes in step S7), the control device 2 generates a sensor image (step S8). In detail, when the instructed motion is the superimposition target motion, the operation detection unit 21 instructs the sensor image generation unit 23 to generate a sensor image, and the sensor image generation unit 23 generates a sensor image based on the sensor information and outputs the generated sensor image to the composite image generation unit 24.

The control device 2 generates a composite image of the camera image and the sensor image (step S9). In detail, the composite image generation unit 24 generates a composite image by superimposing the sensor image on the camera image based on the operation position received from the operation detection unit 21.

For example, the composite image generation unit 24 may superimpose the sensor image on the camera image such that the center of the sensor image is at the operation position or such that the lower end of the sensor image is at the operation position. Alternatively, the composite image generation unit 24 may superimpose the sensor image on the camera image such that the center of the sensor image is at a position offset upward from the operation position, that is, such that a position shifted upward from the center of the sensor image by the offset amount is at the center of the sensor image. The offset amount is, for example, predetermined, but may be changeable by the operator. Since the sensor image is to be displayed near the finger of the operator, in order to reduce a portion of the sensor image that is hidden by the finger and cannot be seen, for example, the offset amount is set such that the position of the sensor image is shifted upward, as compared with the case in which the sensor image is superimposed on the camera image such that the center of the sensor image is at the operation position. However, in order to make it easy for the operator to feel that the finger and the sensor image are linked with each other, the offset amount is desirably set such that, when offset, the operation position is included in a region where the sensor image is superimposed.

Note that, when the two hands 15 include the respective sensors 12, the sensor image generation unit 23 outputs the sensor images in association with, for example, identification information of the sensors 12, and the operation detection unit 21 outputs two operation positions. For example, relative positional relationships of the sensors 12 in the camera image are defined in advance based on an imaging range of the camera 13 and the configuration of the robot 1, and the composite image generation unit 24 determines, based on this definition, which sensor image each operation position corresponds to.

The control device 2 transmits the composite image (step S10), and repeats the processing from step S1. In step S10, in detail, the composite image generation unit 24 outputs the composite image to the communication unit 25, and the communication unit 25 transmits the composite image to the terminal device 3. Consequently, the composite image is displayed on the display 33 of the terminal device 3.

Note that the procedure illustrated in FIG. 5 is merely an example, and the order of processing is not limited to the example illustrated in FIG. 5 as long as equivalent processing can be achieved. Furthermore, in the example illustrated in FIG. 5, the sensor image is generated when the instructed motion is the superimposition target motion. However, the present disclosure is not limited to the above example, and the sensor image generation unit 23 may generate a sensor image each time the sensor information is received and output the sensor image to the composite image generation unit 24. In this case, even if the composite image generation unit 24 receives the sensor image, the composite image generation unit 24 does not superimpose the sensor image on the camera image when the composite image generation unit 24 has not received the operation position from the operation detection unit 21.

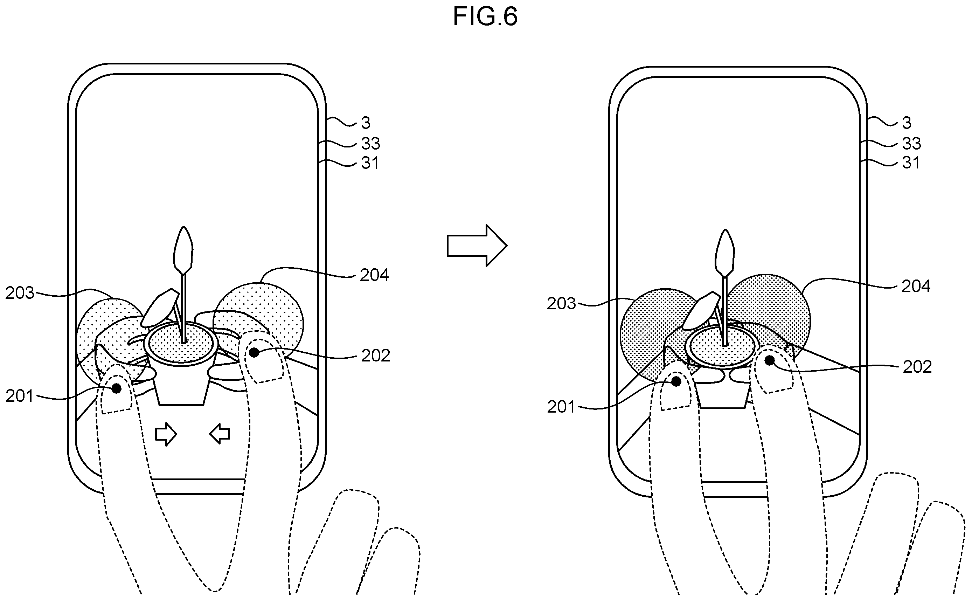

Next, a specific example of the composite image according to the present embodiment will be described. FIGS. 6 to 11 are diagrams each illustrating the specific example of the composite image according to the present embodiment. FIGS. 6 to 11 each illustrate a state in which the operator starts an operation for gripping the target 4 illustrated in FIG. 2, and the operator brings two fingers into contact with the transparent contact panel 31 of the terminal device 3.

In the example illustrated in FIG. 6, as the operator brings the two fingers closer to each other on the transparent contact panel 31 from the state illustrated on the left side, the two hands 15 of the robot 1 approach the target 4 as illustrated on the right side of FIG. 6. Note that, in each of the following figures, a case in which the fingers of the operator are illustrated by broken lines indicates that the transparent contact panel 31 and the display 33 are illustrated in a state in which the fingers of the operator are virtually made transparent. In the example illustrated in FIG. 6, contact positions 201 and 202 at which the two fingers of the operator are in contact with the transparent contact panel 31 are detected as operation positions by the control device 2, and superimposed images 203 and 204, which are the sensor images, are superimposed with their centers at positions offset upward from the operation positions. The superimposed images 203 and 204 are sensor images corresponding to the respective sensors 12 provided on the two hands 15. Furthermore, in the example illustrated in FIG. 6, the magnitude of the detection value indicated by the sensor information is expressed by color intensity of the sensor image. As described above, since the superimposed images 203 and 204 are displayed near the fingers of the operator based on the positions where the operator has brought the fingers into contact with the transparent contact panel 31 for operation, the operator feels as if color intensity of the fingers change. That is, the operator feels as if the operator is experiencing force tactile sensations in response to a change in color intensity of the fingers. As described above, since the superimposed images 203 and 204 are superimposed in linkage with the operation of the operator, the operator can perform the operation while intuitively feeling the force tactile sensations. Note that, in FIG. 6, the magnitude of the detection value indicated by the sensor information is expressed by color intensity of the sensor image, but the color, that is, the hue may be changed in accordance with the magnitude of the detection value indicated by the sensor information.

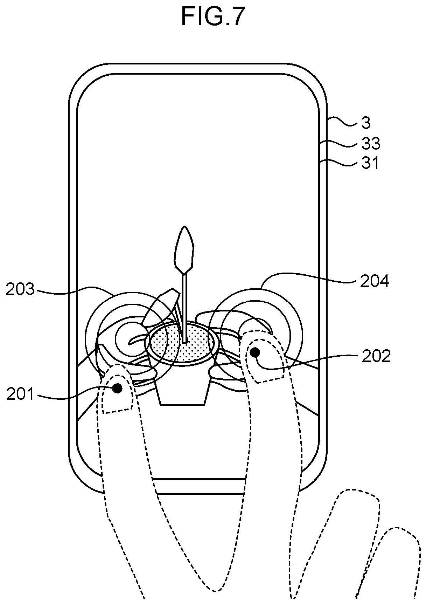

In the example illustrated in FIG. 7, in the superimposed images 203 and 204, the magnitude of the detection value indicated by the sensor information is expressed by the number of rings. For example, in the example illustrated in FIG. 7, each of the sensor images is generated such that the number of rings increases as the detection value indicated by the sensor information increases. By adding rings toward the outside as the detection value indicated by the sensor information increases, the overall image size of each of the superimposed images 203 and 204 may be increased. Alternatively, without changing the size at which each of the superimposed images 203 and 204 is displayed, the density of rings may be increased by changing the number of rings such that the density of rings becomes higher as the detection value indicated by the sensor information increases.

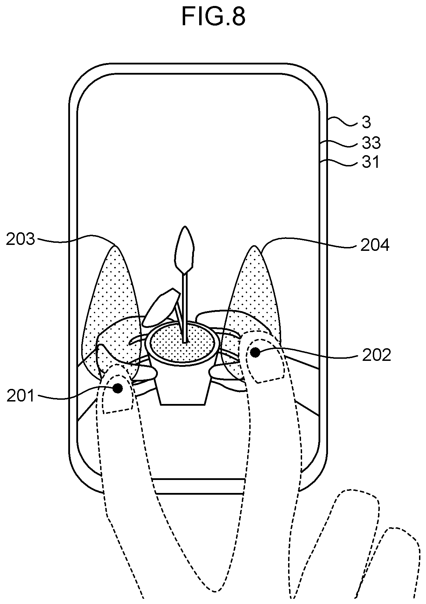

In the example illustrated in FIG. 8, in the superimposed images 203 and 204, the magnitude of the detection value indicated by the sensor information is expressed by the difference in the shape of the figure. For example, when the detection value indicated by the sensor information is higher or lower than that in the state illustrated in FIG. 8, each of the superimposed images 203 and 204 is indicated by a figure different from that in FIG. 8, such as a circle or a rectangle. Note that the shape of the figure is not limited to such an example, and may be any figure.

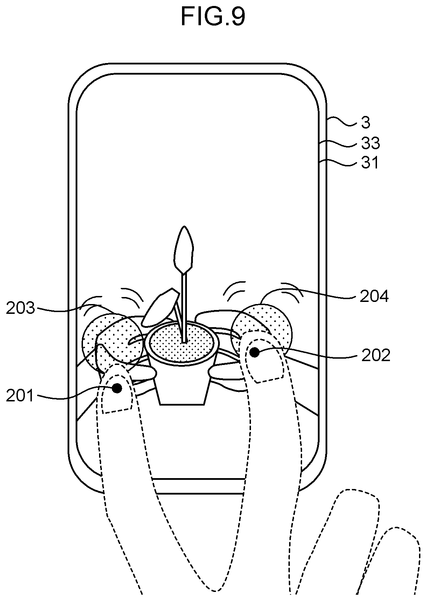

In the example illustrated in FIG. 9, in the superimposed images 203 and 204, the magnitude of the detection value indicated by the sensor information is expressed by a difference in movement of the image such as vibration or shaking of the image. For example, a vibration frequency, a time-varying pattern of vibration, and the like are changed in accordance with the magnitude of the detection value indicated by the sensor information.

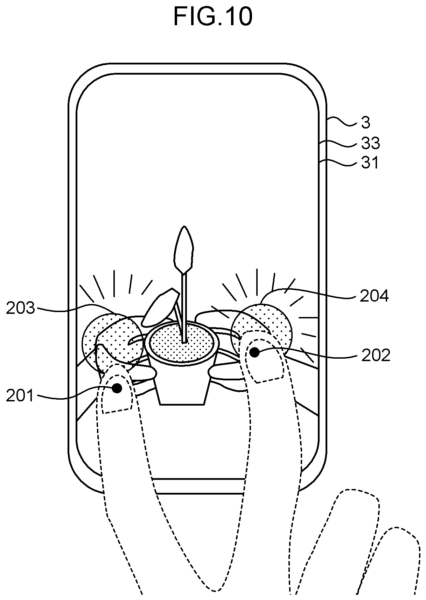

In the example illustrated in FIG. 10, in the superimposed images 203 and 204, the magnitude of the detection value indicated by the sensor information is expressed by a difference in a blinking state of the image. For example, a blinking frequency, a time-varying pattern of the blinking, and the like are changed in accordance with the magnitude of the detection value indicated by the sensor information.

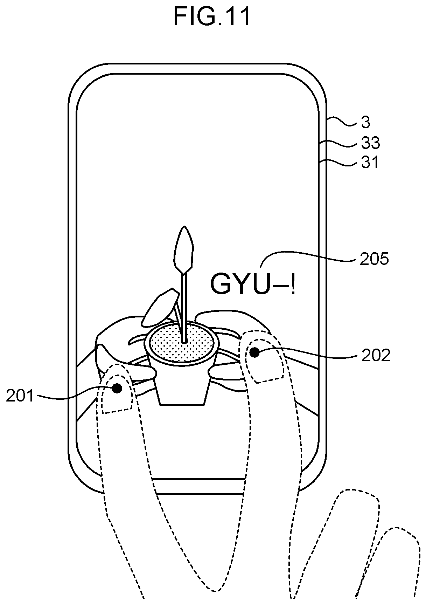

In the example illustrated in FIG. 11, a superimposed image 205, which is the sensor image, includes characters. In the example illustrated in FIG. 11, characters according to the detection value indicated by the sensor information are predetermined. For example, mimetic words, such as "FUWAFUWA", which is a Japanese mimetic word meaning "fluffy", "KYU", which is a Japanese mimetic word expressing a tightening sound, and "GYU-!", which is a Japanese mimetic word expressing gripping tightly, are determined for respective detection values, and the mimetic word according to the detection value is displayed as characters included in the superimposed image 205. Note that the characters to be displayed are not limited to the above words, and any characters may be displayed as long as characters according to the detection value indicated by the sensor information are displayed.

The sensor image is not limited to the examples illustrated in FIGS. 6 to 11. For example, the size of the image may be changed in accordance with the detection value indicated by the sensor information, or a position at which the image is displayed may be changed in accordance with the detection value indicated by the sensor information. For example, like an indicator, the sensor image may be generated such that a horizontally long figure is displayed higher as the detection value indicated by the sensor information increases. Furthermore, the sensor image may be a combination of the above-described examples. For example, both the shape and the color of the sensor image may be changed in accordance with the detection value indicated by the sensor information. Furthermore, a method for displaying the sensor image may be changeable by settings made by the operator.

Furthermore, although the case in which the sensor 12 is the force tactile sensor has mainly been described above, also in a case in which the sensor 12 is a temperature sensor, a pressure sensor, or the like, similarly, a sensor image according to the detection value indicated by the sensor information is generated. In the case of using characters as illustrated in FIG. 11, when the sensor 12 is a temperature sensor, mimetic words indicating temperature may be used, such as "HOKAHOKA", which is a Japanese mimetic word meaning "warm", and "ATSUATSU", which is a Japanese mimetic word meaning "hot".

Next, an example of a screen for accepting an operation from the operator will be described. As described above, the operator performs the operation by bringing a finger into contact with the transparent contact panel 31 in a state in which the camera image is displayed on the display 33 of the terminal device 3. At this time, when a finger is brought into contact at a position away from a portion of the robot 1 corresponding to the sensor 12, there is a possibility that the sensor image may be displayed at an inappropriate position. For example, in a case in which the superimposition target motion is the operation of the hands 15, that is, a grip-related operation, which is the operation for causing the hands 15 to grip the target 4, and the sensor images to be superimposed correspond to the sensors 12 attached to the fingertips of the hands 15, it is assumed that the operator operates the hands 15 by bringing two fingers into contact at positions away from the hands 15. In this case, it is difficult for the operator to recognize a linkage between the operation of the hands 15 and the motion of the hands 15 in the image, and the sensor images are displayed at positions away from the hands 15, making it difficult for the operator to recognize the force tactile sensations detected by the hands 15. To address this situation, an operable range within which the operation of the superimposition target motion can be accepted may be determined. When contact with the transparent contact panel 31 is detected within the operable range, the contact may be accepted as an operation, and when contact with the transparent contact panel 31 is detected outside the operable range, the contact may not be accepted as an operation.

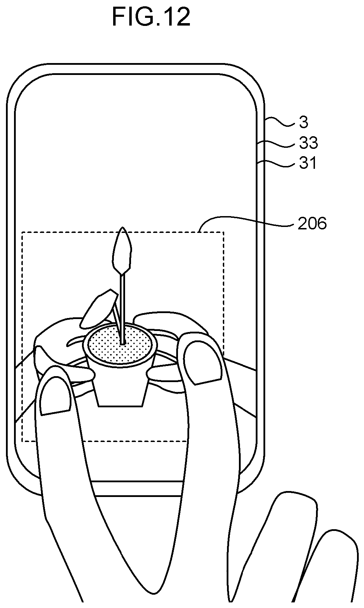

FIG. 12 is a diagram illustrating an example of an operable range according to the present embodiment. In the example illustrated in FIG. 12, the operable range is indicated by a broken-line frame 206. The composite image generation unit 24 may superimpose, on the camera image, such a frame indicating the operable range, and transmit, to the terminal device 3 via the communication unit 25, the camera image on which the frame is superimposed. The frame is not limited to the broken-line frame. The frame may be indicated by a solid line, a dotted line, or another line. Furthermore, the method for indicating the operable range is not limited to indicating the operable range by a frame. The composite image generation unit 24 may indicate the operable range by processing either an area within the operable range or an area outside the operable range with respect to the camera image. For example, the composite image generation unit 24 may indicate the operable range by processing the camera image so as to blur the camera image in the area outside the operable range, by processing the camera image so as to reduce the color contrast of the area outside the operable range, or by processing the camera image so as to render the operable range in color and render the area outside the operable range in monochrome. The method for indicating the operable range is not limited to the above-described example, and may be any method.

Additionally, as described above, since the operator performs the operation with a finger, there is a possibility that the sensor image may be hidden by the finger and become difficult to see. To address this situation, the example has been described above in which the sensor image is superimposed on the camera image such that the center of the sensor image is above the operation position indicated by the finger of the operator. When the sensor image is superimposed at a position shifted from the operation position, that is, at a position offset from the operation position, if the offset amount is large, there is a possibility that the operator may become less likely to feel that the sensor image is linked with the movement of the finger. To address this situation, a figure for linking the operation position and the sensor image (hereinafter such a figure is also referred to as a linkage figure) may be displayed, thereby making it easier for the operator to feel that the sensor image is linked with movement of the finger.

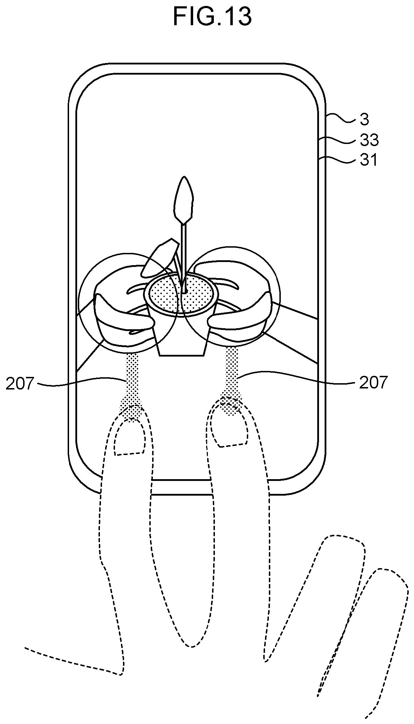

FIG. 13 is a diagram illustrating an example of linkage figures according to the present embodiment. In the example illustrated in FIG. 13, figures 207 are displayed as the linkage figures upward from the operation positions where the fingers of the operator are in contact with the transparent contact panel 31. The figures 207 each include a circular mark indicating the operation position, a bar-shaped figure on the upper side of the circular mark, and a circle on the upper side of the bar-shaped figure. The sensor images are displayed in the upper-side circle portions. In the example illustrated in FIG. 13, the composite image generation unit 24 superimposes the figures 207 upward from the operation positions and superimposes the sensor images on the upper-side circle portions of the figures 207. Since the figures 207 also move with the movement of the fingers of the operator, the operator can feel that the sensor images and the motion of the hands 15 are linked with the movement of the fingers.

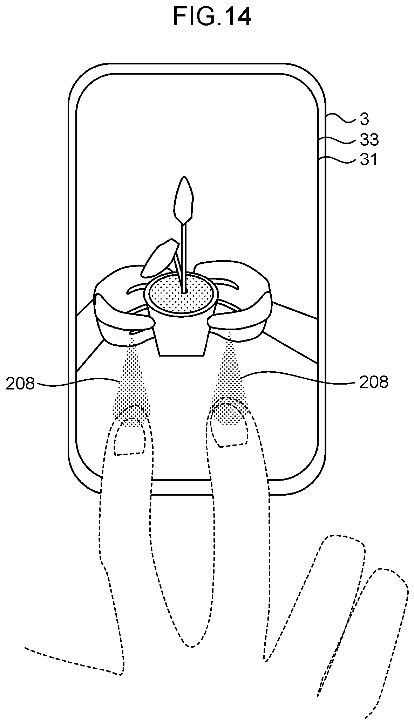

FIG. 14 is a diagram illustrating another example of the linkage figures according to the present embodiment. In the example illustrated in FIG. 14, figures 208 are displayed as the linkage figures upward from the operation positions at which the fingers of the operator are in contact with the transparent contact panel 31. The figures 208 each have a shape gradually becoming thinner upward from the operation position at which the finger of the operator is in contact with the transparent contact panel 31, and the sensor images are superimposed on the tips of the figures 208. The sensor images may each be displayed such that the tip of the figure 208 is at the center of the sensor image, or such that the tip of the figure 208 is at the lower end of the sensor image. Also in this case, since the figures 208 also move with the movement of the fingers of the operator, the operator can feel that the sensor images and the motion of the hands 15 are linked with the movement of the fingers. FIGS. 13 and 14 are merely examples, and the shapes of the linkage figures are not limited to these examples.

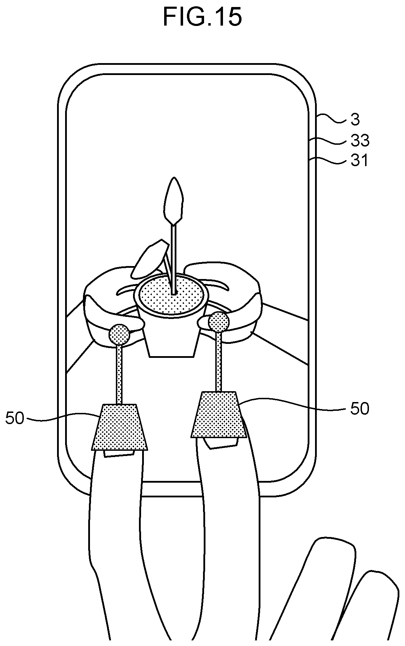

Additionally, visibility of the sensor image may be improved by using an attachment capable of designating, as the operation position on the transparent contact panel 31, a position away from the finger of the operator. FIG. 15 is a diagram illustrating an example of an operation using attachments according to the present embodiment. In the example illustrated in FIG. 15, by the operator wearing attachments 50 on fingertips, the operation positions are set to be above the fingers. The attachments 50 each include, for example, as illustrated in FIG. 15, a cap portion to be worn on the finger, a thin bar-shaped portion, and a tip portion to be brought into contact with the transparent contact panel 31. Note that the shape of the attachment 50 is not limited to the example illustrated in FIG. 15. Since the operation is performed by bringing the attachments 50 worn on the fingers of the operator into contact with the transparent contact panel 31, even when the sensor images are superimposed on the camera image with their centers at the operation positions, it is possible to prevent the sensor images from being hidden by the fingers of the operator. Consequently, visibility of the sensor images can be improved.

Next, another example of the operation method for the robot 1 will be described. In FIG. 2, since it is assumed that the two robot arms 14 move in linkage with each other by the operation for moving the respective hands 15 of the two robot arms 14 closer to or farther from each other, the operator operates the hands 15 with two fingers of one hand. The operation method is not limited to the above example, and each of the two robot arms 14 may be independently operable.

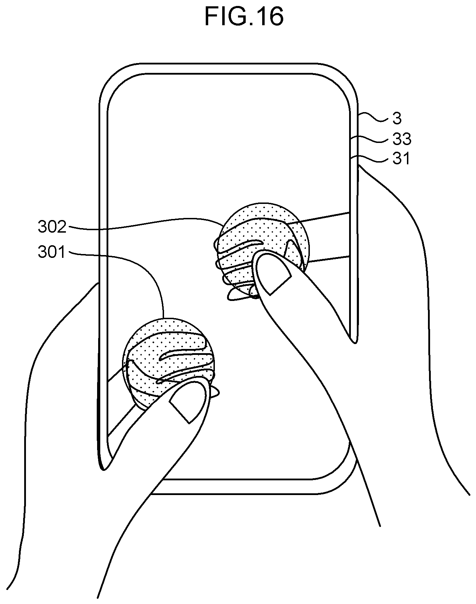

FIG. 16 is a diagram illustrating an example of an operation method for independently operating the two robot arms 14 according to the present embodiment. In the example illustrated in FIG. 16, the respective hands 15 of the two robot arms 14 are operated by a finger of the right hand and a finger of the left hand, respectively. Also in this case, similarly, based on operation positions of the respective fingers, superimposed images 301 and 302, which are sensor images corresponding to the sensors 12 attached to the respective hands 15 of the robot arms 14, are superimposed on the camera image.

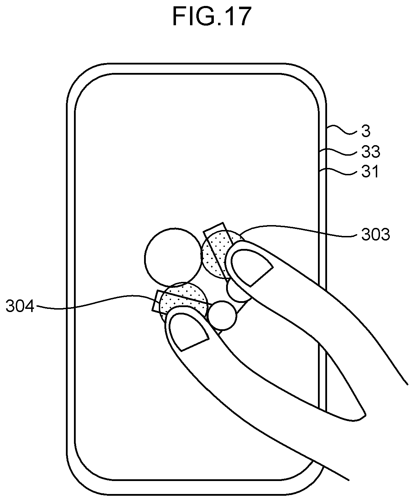

Additionally, each of the hands 15 of the robot arms 14 may have a plurality of fingers, and the plurality of fingers of the hand 15 may be operable. In this case, the respective sensors 12 may be attached to the plurality of fingers of the hand 15. FIG. 17 is a diagram illustrating an example of an operation method for operating two fingers of the hand 15 according to the present embodiment. In the example illustrated in FIG. 17, the two fingers of the hand 15 are operated by two fingers of one hand in a manner similar to the operation of the hands 15 in the example illustrated in FIG. 2, and superimposed images 303 and 304, which are sensor images, are superimposed on the camera image in accordance with the operation positions. Additionally, when the number of fingers of the hand 15 is three or more, for example, the third and subsequent fingers of the hand 15 move in linkage with one of the two fingers operated.

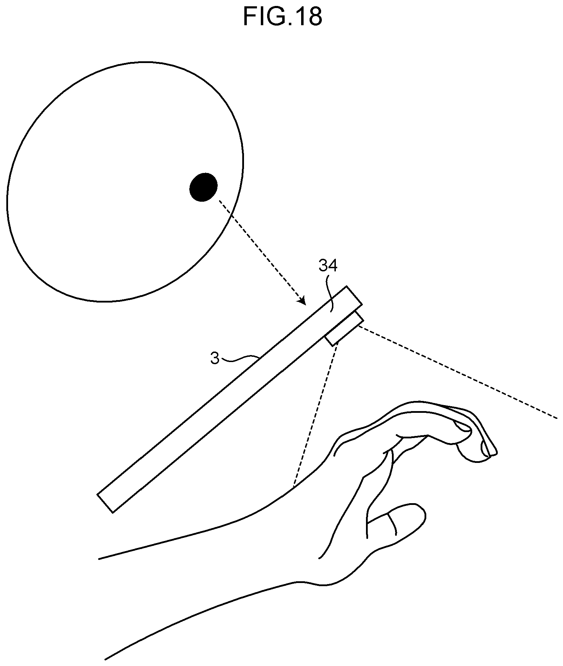

Furthermore, in the above-described examples, the example has been described in which the operation device is the transparent contact panel 31. However, the superimposition of the sensor image according to the present embodiment is not limited to the above example, and may be applied to, for example, an example in which a gesture of the operator is accepted as an operation. FIG. 18 is a diagram illustrating an example of an operation by a gesture according to the present embodiment. In this case, for example, an operation of the operator and a motion of the robot 1 are associated with each other such that fingers of the hand 15 of the robot 1 move similarly to fingers of the hand of the operator. In the example illustrated in FIG. 18, the terminal device 3 includes a camera 34 as an operation device, and in a state in which the camera image is displayed on the terminal device 3, the camera 34 captures an image of the hand of the operator, and the captured image is transmitted, as operation information, to the control device 2 via the communication unit 32. As described above, the operation device may be a device that captures an image of the operator, and in this case, the operation information includes an image captured by the operation device. The operation detection unit 21 detects an operation position and a motion instruction from an image included in the operation information. Note that although FIG. 18 illustrates a case in which the camera 34 is an out-camera of the terminal device 3, the camera 34 may be a camera provided separately from the terminal device **3.** Additionally, in a case in which the hand of the operator is between the operator and the terminal device 3, the camera 34 may be an in-camera included in the terminal device **3.**

In the example illustrated in FIG. 18, the hand 15 has five fingers, and the five fingers are associated with five fingers of the hand of the operator, respectively. Additionally, the sensors 12 are attached to the fingertips of the respective fingers of the hand 15. The operation detection unit 21 analyzes the image captured by the camera 34, associates the movement of the fingers of the operator with the movement of the fingers of the hand 15, and outputs, as a motion instruction, the associated movement of the fingers of the hand 15 to the drive command generation unit 22. Furthermore, the operation detection unit 21 detects, as the operation positions, predetermined positions of the associated fingers of the hand 15 **(e.g.,** fingertips), and outputs the detected operation positions to the composite image generation unit 24. Based on the received operation positions, the composite image generation unit 24 superimposes, for each operation position, the sensor image of the corresponding sensor 12 on the camera image.

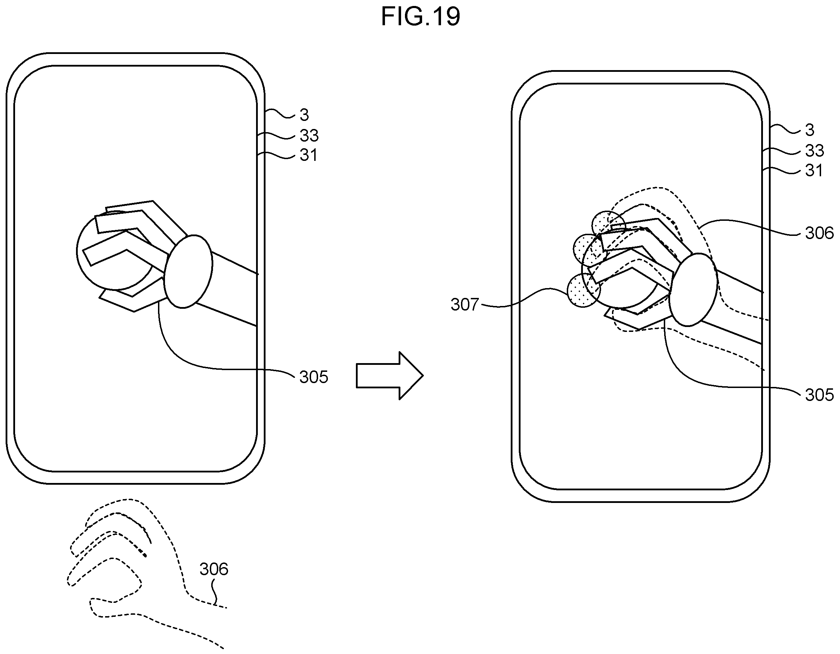

FIG. 19 is a diagram illustrating an example of a composite image when an operation is performed by the gesture according to the present embodiment. In the example illustrated in FIG. 19, the hand 15 includes five fingers 305. As illustrated in FIG. 19, in order to make it easy to recognize that the sensor images are linked with movement of the fingers of the operator, the composite image generation unit 24 displays, in a portion corresponding to the hand 15 in the camera image, a hand image 306 representing the hand of the operator in a transparent manner such that the background is visible through the hand image 306. The hand image 306 may be, for example, an image of the hand of the operator that is extracted (cut out) from the image captured by the camera 34 and displayed in the camera image, or may be a Computer Graphics (CG) image simulating the hand of a person. Note that the display position of the hand image 306 is preferably set to a position corresponding to the hand 15. Accordingly, for example, the composite image generation unit 24 may display the hand image 306 at a predetermined position in the camera image, and, when there is a positional deviation between the hand image 306 and the hand 15, the display position of the hand image 306 may be changed based on the operation performed by the operator. Alternatively, the composite image generation unit 24 may obtain the position of the hand 15 from the camera image. In the example illustrated in FIG. 19, the sensors 12 are provided in the respective fingers 305, and sensor images 307 for the respective fingers 305 are displayed.

Additionally, the number of fingers of the hand 15 is not limited to five. For example, when the hand 15 has three fingers, the respective fingers of the hand 15 are associated in advance with three of the fingers of the operator. Additionally, similarly, when movement of a motion part that is a body part of the operator such as a foot, an arm, or a head, is determined as a gesture for operation and the robot 1 performs a motion in accordance with the gesture, the operation detection unit 21 similarly detects a predetermined position of the motion part as the operation position. That is, the operation detection unit 21 determines the operation position using the position of the motion part in the operation information.

Next, an operation for superimposing a sensor image will be described. In the above-described example, the sensor images are superimposed while the two fingers of the operator are in contact with the transparent contact panel 31. However, the present disclosure is not limited to the example, and the sensor images may be kept superimposed even after the fingers of the operator are separated from the transparent contact panel 31 after the sensor images are superimposed. In this case, for example, the composite image generation unit 24 regards, as the operation positions, the last contact positions of the two fingers of the operator on the transparent contact panel 31, and superimposes the sensor images on the camera image. Note that, when the camera 13 is drivable and an imaging direction of the camera 13 is changeable, the composite image generation unit 24 acquires, from the camera 13, information indicating a drive angle of the camera 13, and moves the operation position based on the drive angle of the camera 13, thereby superimposing the sensor image at the position corresponding to the operation position before driving of the camera 13. For example, when the camera 13 rotates by 30 degrees, in the camera image acquired after rotation, the operation position is moved to a position rotated by -30 degrees. Additionally, when the terminal device 3 moves, a sensor included in the terminal device 3 detects movement of the terminal device 3, and the camera image displayed on the display 33 changes. Then, the position of the sensor image to be superimposed on the camera image is also shifted by an amount corresponding to the change of the camera image. For example, when the operator moves the terminal device 3 while making contact at the position on the transparent contact panel 31 corresponding to the fingertip of the hand 15 displayed on the display 33, the position of the sensor image to be superimposed on the camera image is shifted so as to match the fingertip of the hand 15. Note that, when a movement range of the terminal device 3 exceeds an angle of view of the camera 13, the camera 13 is also driven in linkage with movement of the terminal device 3. Furthermore, when determining that the camera image is busy, that is, there are many display objects, the composite image generation unit 24 may stop superimposing the sensor image. Whether the camera image is busy may be determined based on the camera image capacity, by analyzing the luminance distribution, or by other methods.

Note that the movement of the robot 1 is desirably synchronized with the movement of the operator. That is, the drive command generation unit 22 generates a drive command according to the operation information, thereby synchronizing the motion of the robot 1 with the motion of the operator. This improves the operability of the operator. For example, in the case of the robot 1 having the configuration illustrated in FIG. 2, the drive command generation unit 22 generates a motion command such that the hands 15 or the fingertips of the hands 15 of the robot 1 move in synchronization with the movement of the fingers of the operator, thereby synchronizing the movement of the robot 1 with the movement of the operator.

Additionally, when the robot 1 detects a collision, the robot 1 may automatically stop. For example, the robot 1 may include, separately from the sensor 12, a collision sensor capable of detecting a distance from the robot 1 to a surrounding object, a structure, or the like. When the robot 1 detects a collision using a detection result from the collision sensor, the robot 1 may stop performing a motion. Specifically, the robot 1 may include a stop determination unit that determines that a collision occurs when a distance from the hand 15 or the like of the robot 1 to a surrounding object, a structure, or the like becomes less than a threshold value, and causes the robot 1 to stop automatically. Additionally, the drive command generation unit 22 of the control device 2 may also have a function as the stop determination unit, and, based on a detection result from the collision sensor of the robot 1, may generate a drive command to cause the robot 1 to stop when a distance from the robot 1 to a structure or the like becomes less than the threshold value.

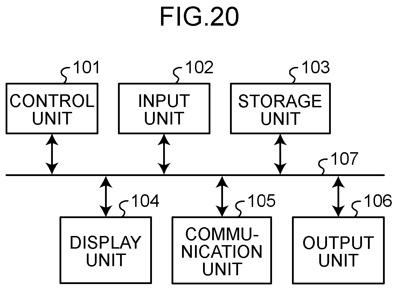

Next, a hardware configuration of the control device 2 according to the present embodiment will be described. In the control device 2 according to the present embodiment illustrated in FIG. 1, a computer system functions as the control device 2 by executing, on the computer system, a program that is a computer program describing processing in the control device 2. FIG. 20 is a diagram illustrating an exemplary configuration of a computer system that implements the control device 2 according to the present embodiment. As illustrated in FIG. 20, the computer system includes a control unit 101, an input unit 102, a storage unit 103, a display unit 104, a communication unit 105, and an output unit 106, which are connected through a system bus 107. The control unit 101 and the storage unit 103 constitute processing circuitry.

In FIG. 20, the control unit 101 is, for example, a processor such as a Central Processing Unit (CPU), and executes a program describing processing in the control device 2 according to the present embodiment. Note that a part of the control unit 101 may be implemented by dedicated hardware such as a Graphics Processing Unit (GPU) or a Field-Programmable Gate Array (FPGA). The input unit 102 includes a button, a keyboard, a mouse, a touch pad, and the like. The storage unit 103 includes various memories such as a Random Access Memory (RAM) and a Read Only Memory (ROM) and a storage device such as a hard disk, and stores the program to be executed by the control unit 101, necessary data obtained in the course of processing, and the like. Additionally, the storage unit 103 is used as a temporary storage area for a program. The display unit 104 is, for example, a display such as a Liquid Crystal Display (LCD) panel. Note that the display unit 104 and the input unit 102 may be integrated and implemented as a touch panel or the like. The communication unit 105 is a receiver and a transmitter used to perform communication processing. The output unit 106 includes a speaker and the like. Note that FIG. 20 is merely an example, and the configuration of the computer system is not limited to the example of FIG. 20. For example, the computer system that implements the control device 2 need not include the input unit 102, the display unit 104, and the output unit 106.

A description will now be given of an exemplary motion of the computer system until the program according to the present embodiment becomes executable. In the computer system having the above-described configuration, for example, a computer program is installed in the storage unit 103 from a Compact Disc (CD)-ROM or a Digital Versatile Disc (DVD)-ROM set in a CD-ROM drive or a DVD-ROM drive (not illustrated). Upon the execution of the program, the program read from the storage unit 103 is stored in the main storage area of the storage unit 103. In this state, the control unit 101 executes processing as the control device 2 according to the present embodiment in accordance with the program stored in the storage unit 103.

Note that, in the above description, the program describing the processing in the control device 2 is provided using the CD-ROM or the DVD-ROM as a recording medium, but the present disclosure is not limited thereto. Depending on the configuration of the computer system, the capacity of the program to be provided, and the like, a program provided via, for example, a transmission medium such as the Internet may be used.

The operation detection unit 21, the drive command generation unit 22, the sensor image generation unit 23, and the composite image generation unit 24 that are illustrated in FIG. 1 are implemented by the control unit 101 illustrated in FIG. 20 executing a computer program stored in the storage unit 103 illustrated in FIG. 20. The storage unit 103 illustrated in FIG. 20 is also used to implement the operation detection unit 21, the drive command generation unit 22, the sensor image generation unit 23, and the composite image generation unit 24 that are illustrated in FIG. 1. The communication unit 25 illustrated in FIG. 1 is implemented by the communication unit 105 illustrated in FIG. 20. Note that the control device 2 may be implemented by a plurality of computer systems. Furthermore, for example, the control device 2 may be implemented by a cloud computer system.

Furthermore, when the terminal device 3 also has a function as the control device 2, the terminal device 3 is also implemented by, for example, the computer system illustrated in FIG. 20. In this case, the input unit 102 is the transparent contact panel 31 illustrated in FIG. 1, and the display unit 104 is the display 33. Furthermore, when the robot 1 also has a function as the control device 2, the robot 1 includes the computer system illustrated in FIG. 20. In this case, the robot 1 only needs to include, as the computer system, processing circuitry including the control unit 101 and the storage unit 103, and need not include at least a part of the other components.

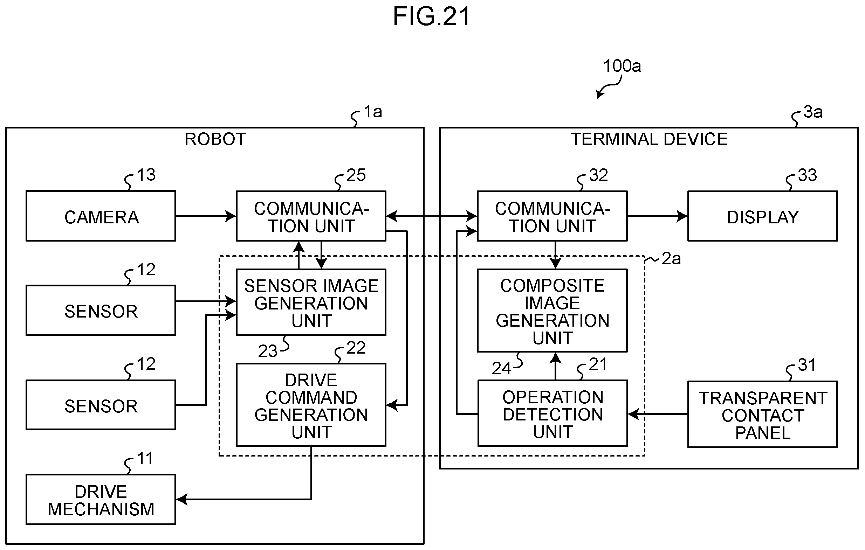

Additionally, as described above, the exemplary configuration illustrated in FIG. 1 is merely an example, and functions of the control device 2 may be distributed among a plurality of devices. FIG. 21 is a diagram illustrating another exemplary configuration of the remote control system according to the present embodiment. Components having functions similar to those in FIG. 1 are denoted by the same reference numerals as those in FIG. 1, and a redundant description will be omitted. A remote control system 100a illustrated in FIG. 21 includes a robot 1a and a terminal device 3a. The robot 1a is obtained by adding the drive command generation unit 22, the sensor image generation unit 23, and the communication unit 25 to the robot 1 illustrated in FIG. 1. The terminal device 3a is obtained by adding the operation detection unit 21 and the composite image generation unit 24 to the terminal device 3 illustrated in FIG. 1. In the remote control system 100a illustrated in FIG. 21, the functions of the control device 2 illustrated in FIG. 1 are disposed in a distributed manner in the robot 1a and the terminal device 3a. That is, a control device 2a illustrated in FIG. 21 is implemented by a plurality of devices. FIG. 21 is merely an example, and the separation of the functions between the robot 1a and the terminal device 3a is not limited to the example illustrated in FIG. 21. For example, the robot 1a may include the composite image generation unit 24. Additionally, a composite image generation device including the composite image generation unit 24 may be provided separately from the robot 1a and the terminal device 3a, and the functions of the control device 2 illustrated in FIG. 1 may be distributed among three devices.

As described above, in the present embodiment, the remote control systems 100 and 100a are configured to superimpose and display the sensor image, which is the image indicating the detection value acquired by the sensor 12, based on a position (a position in the camera image) designated by the operator through operation of the robot 1 or the robot 1a using a body part such as a finger. Thus, as devices used by the operator, it is only necessary to provide a display device for the operator to check a situation of the robot 1 or the robot 1a and an operation device to accept input of an operation, and it is not necessary to additionally use a tactile presentation device or the like for the operator to recognize the detection value by the sensor 12. The operator can perform an operation while feeling that the sensor image superimposed on the camera image is linked with a body part of the operator. Thus, the present embodiment enables an operator to perform operations intuitively without increasing the complexity of a device used by the operator. Additionally, since the sensor image is superimposed on the camera image based on the position designated through operation of the robot 1 or the robot 1a, calculation for obtaining the position at which the sensor image is to be superimposed becomes unnecessary, and thus, the calculation load can be reduced.

### Second Embodiment.

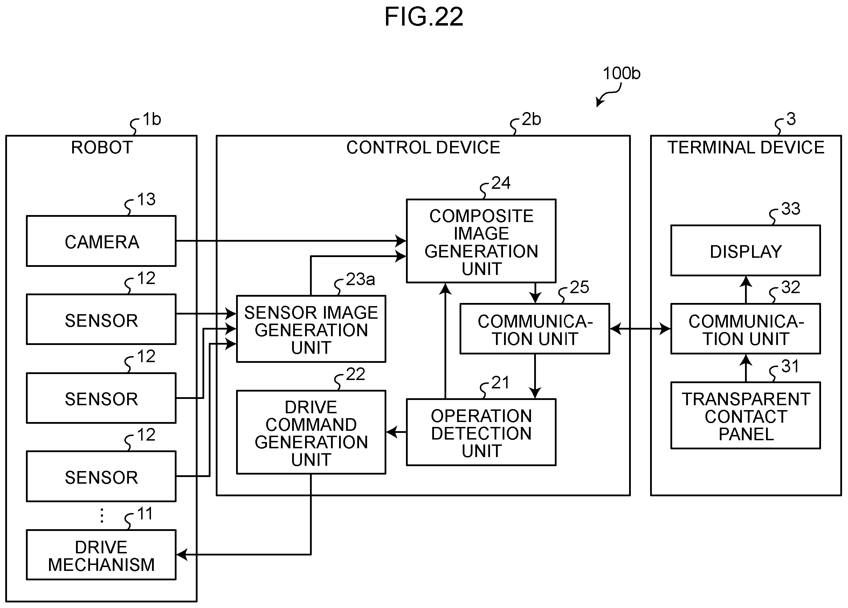

FIG. 22 is a diagram illustrating an exemplary configuration of a remote control system according to a second embodiment. A remote control system 100b according to the present embodiment includes a robot 1b, a control device 2b, and the terminal device 3. The terminal device 3 is similar to the terminal device 3 according to the first embodiment. Components having functions similar to those in the first embodiment are denoted by the same reference numerals as those in the first embodiment, and a redundant description will be omitted. Hereinafter, points different from the first embodiment will be mainly described.

As in the first embodiment, the robot 1b includes the drive mechanism 11, the sensors 12, and the camera 13. Each of the sensors 12 detects at least one of the robot 1b and a state around the robot 1b. The camera 13 captures an image of an area around the robot 1b. In the first embodiment, the examples have been described in which one sensor 12 is provided per component of the robot 1, that is, per location, such as providing one sensor 12 on each of the two hands 15 and providing one sensor 12 on each finger of the hand 15. In the present embodiment, an example in which a plurality of sensors 12 is provided at one location will be described. At one location, a plurality of sensors 12 of the same type may be provided or sensors 12 of different types may be provided. For example, in one hand 15, as the sensors 12, a plurality of force tactile sensors may be provided at slightly different positions or a plurality of force tactile sensors and a plurality of temperature sensors may be provided.

The control device 2b is similar to the control device 2 according to the first embodiment except that a sensor image generation unit 23a is provided instead of the sensor image generation unit 23. The sensor image generation unit 23a generates sensor images based on the sensor information of the plurality of sensors 12 provided at one location, and outputs the generated sensor images to the composite image generation unit 24. As in the first embodiment, the composite image generation unit 24 superimposes the sensor images on the camera image based on the operation positions.

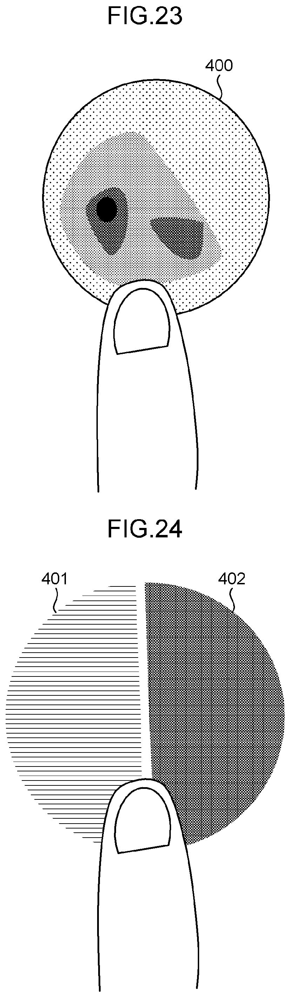

FIG. 23 is a diagram illustrating an example of sensor images according to the present embodiment when the sensors 12 of the same type are provided at one location. As in the first embodiment, also in the present embodiment, the sensor images are superimposed on the camera image. However, FIG. 23 illustrates a sensor image portion in an enlarged manner for easy understanding. In the example illustrated in FIG. 23, the sensor image generation unit 23a generates a contour diagram 400 as sensor images based on the sensor information of the plurality of sensors 12 of the same type and the attachment positions of the respective sensors 12. The contour diagram 400 may be indicated by color intensity or color coding. Note that the sensor images in the case in which the sensors 12 of the same type are provided at one location are not limited to the example illustrated in FIG. 23. For example, the divided pressure may be indicated by color coding or color intensity in a mesh shape. In this manner, the sensor image generation unit 23a may generate, using the detection values acquired by the plurality of sensors 12 of the same type, images indicating the distribution of the detection values as the sensor images.

FIG. 24 is a diagram illustrating an example of sensor images according to the present embodiment when the sensors 12 of different types are provided at one location. FIG. 24 also illustrates the sensor image portion in an enlarged manner for easy understanding. In the example illustrated in FIG. 24, two types of sensors 12, such as a force tactile sensor and a temperature sensor, are provided at the fingertip of one hand 15. In the example illustrated in FIG. 24, the sensor image generation unit 23a generates sensor images including images 401 and 402 respectively corresponding to sensor information of the two sensors 12. For example, colors of the images 401 and 402 are made different, and the images 401 and 402 are indicated by color intensity according to the detection values. The sensor images corresponding to the two types of sensors 12 are not limited to those in FIG. 24. For example, a sensor image region may be divided by the number of sensors 12 corresponding to one location, and for each divided region, detection values of sensor information of the respective sensors 12 may be expressed by various sensor image expression methods described in the first embodiment. Additionally, expression methods corresponding to the respective sensors 12 need not be the same. For example, detection value expression methods may be made different for each sensor 12, such as changing color intensity in accordance with a detection value of the force tactile sensor, and changing hue in accordance with a detection value of a temperature sensor. Additionally, without dividing the region for each sensor 12, for example, an image with color intensity or hue changed as illustrated in FIG. 6 may be generated in accordance with the detection value of the force tactile sensor, the detection value of the temperature sensor may be expressed by the number of rings as illustrated in FIG. 7, and an image indicating the detection value of the temperature sensor may be superimposed on the image indicating the detection value of the force tactile sensor. In this manner, the sensor image generation unit 23a may generate sensor images including images individually representing the detection values of the respective types of sensors 12 using the detection values acquired by the plurality of sensors 12 of different types.

As in the first embodiment, the control device 2b according to the present embodiment is implemented by, for example, the computer system illustrated in FIG. 20. The control device 2b may be implemented by a plurality of computers similarly to the control device 2 according to the first embodiment, and may be implemented by, for example, a cloud computer system. Additionally, similarly to the control device 2b according to the first embodiment, the control device 2b according to the present embodiment may be integrated with the robot 1b or the terminal device 3. Additionally, similarly to the control device 2a according to the first embodiment, respective functions of the control device 2b according to the present embodiment may be distributed among a plurality of devices.

### Third Embodiment.

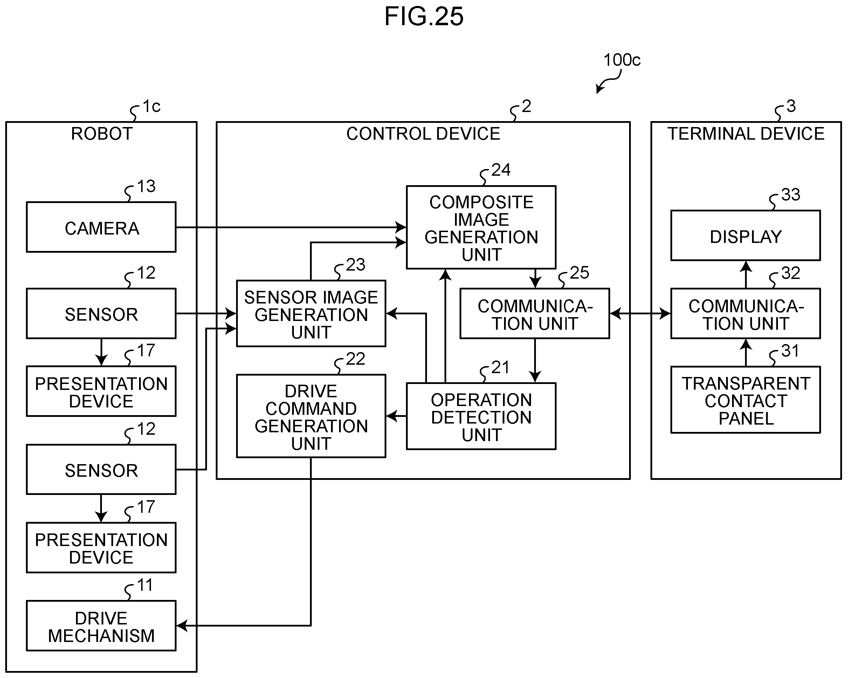

FIG. 25 is a diagram illustrating an exemplary configuration of a remote control system according to a third embodiment. A remote control system 100c according to the present embodiment includes a robot 1c, the control device 2, and the terminal device 3. The control device 2 and the terminal device 3 are similar to the control device 2 and the terminal device 3 according to the first embodiment. Components having functions similar to those in the first embodiment are denoted by the same reference numerals as those in the first embodiment, and a redundant description will be omitted. Hereinafter, points different from the first embodiment will be mainly described.

The robot 1c is similar to the robot 1 according to the first embodiment except that presentation devices 17 are added to the robot 1 according to the first embodiment. In the present embodiment, each of the presentation devices 17 presents the sensor information acquired by the sensor 12 to the surroundings. The presentation device 17 is a device capable of displaying the detection value detected by the sensor 12. The presentation device 17 is, for example, a Light Emitting Diode (LED), a small monitor, or the like, and emits light in accordance with the detection value indicated by the sensor information or displays at least one of characters and an image according to the detection value. When the presentation device 17 is an LED, the detection value may be indicated by a lighting state (e.g., blinking, turning on, and turning off) of the LED, or LEDs of different colors may be provided to emit light in different colors in accordance with the detection value.

For example, when the sensor 12 is a force tactile sensor, a person around the robot 1c can grasp whether the hands 15 of the robot 1c firmly grip the target 4 or lightly grip the target 4. This can contribute to improving safety, for example, by enabling a person around the robot 1c to monitor the gripping state of the target 4, and to evacuate when the target 4 is likely to fall.

Also in the present embodiment, as in the first embodiment, the control device 2 is implemented by, for example, the computer system illustrated in FIG. 20. The control device 2 may be implemented by a plurality of computers similarly to the control device 2 according to the first embodiment, and may be implemented by, for example, a cloud computer system. Additionally, similarly to the control device 2 according to the first embodiment, the control device 2 according to the present embodiment may be integrated with the robot 1c or the terminal device 3. Additionally, similarly to the control device 2a according to the first embodiment, respective functions of the control device 2 according to the present embodiment may be distributed among a plurality of devices.

Additionally, the presentation device 17 may be added to the robot 1b of the remote control system 100b according to the second embodiment, and the presentation device 17 may emit light in accordance with the detection value indicated by the sensor information or perform display according to the detection value.

Furthermore, in FIG. 25, the presentation device 17 is provided for each sensor 12, but the presentation device 17 may be provided for some of the plurality of sensors 12. Furthermore, the presentation device 17 may include a plurality of types of LEDs, and the respective LEDs may be associated with the respective sensors 12. Furthermore, when the presentation device 17 is a small monitor, a display region of the small monitor may be divided, and sensor information of the plurality of sensors 12 may be displayed in the respective divided regions.

### Fourth Embodiment.

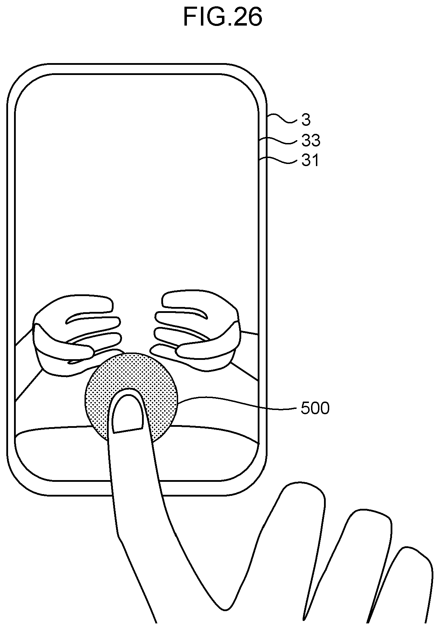

FIG. 26 is a diagram illustrating an example of a composite image according to a fourth embodiment. A configuration of the remote control system 100 according to the present embodiment is similar to that according to the first embodiment. In the first embodiment, the example has mainly been described in which, in the exemplary configuration illustrated in FIG. 2, when the hands 15 are operated, the sensor images corresponding to the sensors 12 attached to the hands 15 are superimposed on the camera image. The sensor images are not limited to such an example, and may be, for example, images indicating a driving force for driving the moving mechanism. In this case, each of the sensors 12 is a sensor that detects the driving force, and is, for example, a sensor that detects a motor current or the like indicating the driving force for the movement of the carriage 16.

As in the example described with reference to FIG. 2, it is assumed that the operator moves one finger on the transparent contact panel 31 when moving the carriage 16. In the present embodiment, movement of the carriage 16 is also included in the superimposition target motion, and the operation detection unit 21 detects the contact of one finger based on the operation information, and determines that the movement of the carriage 16 is instructed. The operation detection unit 21 detects an operation position based on the operation information, and outputs the detected operation position to the composite image generation unit 24. The composite image generation unit 24 superimposes, on the camera image, the sensor image corresponding to the sensor 12 that detects the driving force.

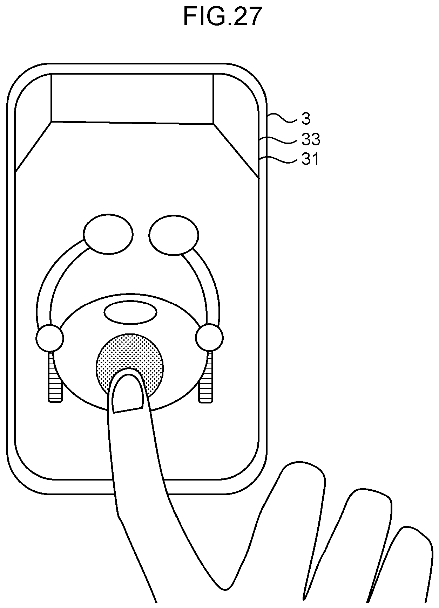

On the display 33 of FIG. 26, only a part of the carriage 16 is displayed. However, as illustrated in FIG. 27, the entire carriage 16 may be displayed. FIG. 27 is a diagram illustrating another example of the composite image according to the fourth embodiment. The image displayed in this case is, for example, an image captured by another camera attached to an upper portion of the carriage 16, or a CG image using a known carriage model.

As illustrated in FIG. 26, when the operator brings one finger into contact with the transparent contact panel 31 to move the carriage 16, an image 500, which is a sensor image corresponding to the sensor 12 for detecting the driving force, is superimposed and displayed on the camera image. This enables the operator to perform an operation for moving the carriage 16 while recognizing the driving force. For example, when the driving force is large but the carriage 16 does not move much, it is conceivable that the condition of a floor surface under the carriage 16 or a road surface is poor, for example, because the surface has many irregularities. On the contrary, when the driving force is small but the carriage 16 moves fast, it is conceivable that the floor surface under the carriage 16 or the road surface is smooth. In this manner, by checking the driving force and the moving state, the operator can operate movement of the carriage 16 while grasping the state of the floor surface, the road surface, or the like. As described in the first embodiment, driving force expression methods may be based on color intensity, hue, the number of rings, blinking, vibration, or characters, but are not limited thereto.

Additionally, the remote control system 100 may perform both or only one of superimposition of the sensor image indicating the driving force during the operation for moving the carriage 16 and superimposition of the sensor images indicating the detection values of the sensors 12 during the operation of the hands 15 described in the first embodiment. Additionally, the remote control system 100 may be configured to allow the operator to set whether to perform both of them or either one of them.

Note that, in the remote control system 100b according to the second embodiment or the remote control system 100c according to the third embodiment, similarly, superimposition of the sensor image indicating the driving force during the operation for moving the carriage 16 may be performed. Additionally, in a remote control system obtained by combining the second embodiment and the third embodiment, similarly, superimposition of the sensor image indicating the driving force during the operation for moving the carriage 16 may be performed.

The features described in connection with the above embodiments are illustrative only and may be combined with the other known techniques. The embodiments may be combined with each other. The features may partially be omitted or modified without departing from the gist.

Hereinafter, various aspects of the present disclosure will be collectively described as supplementary notes.

### (Supplement 1)

A remote control system comprising:
an edge device including a sensor;
an operation device to accept, as an operation on the edge device, a motion of an operator for causing the edge device to perform a motion;
a camera to capture a camera image that is an image including an area around the edge device;
a sensor image generation unit to generate, using a detection value detected by the sensor, a sensor image that is an image according to the detection value;
an operation detection unit to detect an operation position that is a position in the camera image corresponding to the operation;
a composite image generation unit to determine, based on the operation position, a position at which the sensor image is to be superimposed on the camera image, and to generate a composite image by superimposing the sensor image on the camera image at the position determined; and
a display device to display the composite image.

### (Supplement 2)

The remote control system according to supplement 1, wherein
the operation is performed by a finger of the operator,
the operation device is a transparent contact panel integrated with the display device,
operation information accepted by the operation device includes position information indicating a position at which the finger is brought into contact with the transparent contact panel in the operation, and
the operation detection unit determines a position at which the sensor image is to be superimposed on the camera image using the position information.

### (Supplement 3)

The remote control system according to supplement 2, wherein
the operation detection unit sets, as the operation position, the position in the camera image corresponding to the position indicated by the position information, and
the composite image generation unit superimposes the sensor image on the camera image such that the sensor image is superimposed at a position including the operation position.

### (Supplement 4)

The remote control system according to supplement 3, wherein
the operation detection unit sets, as the operation position, the position indicated by the position information, and
the composite image generation unit superimposes the sensor image on the camera image such that a center of the sensor image is at the operation position.

### (Supplement 5)

The remote control system according to supplement 3, wherein
the operation detection unit sets, as the operation position, the position indicated by the position information, and
the composite image generation unit superimposes the sensor image on the camera image such that a center of the sensor image is at a position offset upward from the operation position.

### (Supplement 6)

The remote control system according to supplement 3, wherein
the operation is performed by bringing an attachment worn on the finger of the operator into contact with the transparent contact panel, and
the composite image generation unit superimposes the sensor image on the camera image such that a center of the sensor image is at the operation position.

### (Supplement 7)

The remote control system according to supplement 1, wherein
the operation is performed by a motion part that is a body part of the operator,
the operation device includes a device to capture an image of the operator,
operation information accepted by the operation device includes an image captured by the operation device, and
the operation detection unit determines the operation position using a position of the motion part in the operation information accepted by the operation device.

### (Supplement 8)

The remote control system according to any one of supplements 1 to 7, wherein
the edge device includes a hand capable of gripping a target,
the sensor is attached to the hand, and
the operation includes a grip-related operation that is an operation for causing the hand to grip the target.

### (Supplement 9)

The remote control system according to supplement 8, wherein the sensor includes a force tactile sensor.

### (Supplement 10)

The remote control system according to supplement 8, wherein the sensor includes a temperature sensor.

### (Supplement 11)

The remote control system according to any one of supplements 8 to 10, wherein
the operation is performed by a finger of the operator,
the operation device is a transparent contact panel integrated with the display device,
operation information accepted by the operation device includes position information indicating a position at which the finger is brought into contact with the transparent contact panel in the operation, and
when two fingers of the operator touch the transparent contact panel simultaneously, the operation detection unit determines that the operation by the operator is the grip-related operation, and determines, using the position information in the grip-related operation, a position at which the sensor image is to be superimposed on the camera image.

### (Supplement 12)

The remote control system according to any one of supplements 1 to 11, wherein
the edge device includes a moving mechanism for moving, and
the sensor includes a sensor to detect a driving force for driving the moving mechanism.

### (Supplement 13)

The remote control system according to any one of supplements 1 to 12, comprising
a drive command generation unit to generate a drive command for the edge device, wherein
the drive command generation unit generates a drive command according to operation information accepted by the operation device, thereby synchronizing a motion of the edge device with the motion of the operator.

### (Supplement 14)

The remote control system according to any one of supplements 1 to 13, wherein the composite image generation unit generates, using detection values acquired by a plurality of the sensors of the same type, images indicating a distribution of the detection values as the sensor images.

### (Supplement 15)

The remote control system according to any one of supplements 1 to 14, wherein the composite image generation unit generates, using detection values acquired by a plurality of the sensors of different types, the sensor images including images individually representing the detection values of the respective types of the sensors.

### (Supplement 16)

The remote control system according to any one of supplements 1 to 15, wherein
the edge device includes a collision sensor to detect a collision, and
when the edge device detects a collision using a detection result from the collision sensor, the edge device stops performing a motion.

### (Supplement 17)

The remote control system according to any one of supplements 1 to 16, wherein the edge device includes a presentation device capable of displaying a detection value detected by the sensor.

### (Supplement 18)

A remote control method applied to a remote control system to remotely control an edge device including a sensor, the remote control method comprising:
a step of accepting, as an operation on the edge device, a motion of an operator for causing the edge device to perform a motion;
a step of capturing a camera image that is an image including an area around the edge device;
a step of generating, using a detection value detected by the sensor, a sensor image that is an image according to the detection value;
a step of detecting an operation position that is a position in the camera image corresponding to the operation;
a step of determining, based on the operation position, a position at which the sensor image is to be superimposed on the camera image, and generating a composite image by superimposing the sensor image on the camera image at the position determined; and
a step of displaying the composite image.

### Reference Signs List

1, 1a, 1b, 1c robot; 2, 2a, 2b control device; 3, 3a terminal device; 4 target; 11 drive mechanism; 12 sensor; 13, 34 camera; 14 robot arm; 15 hand; 16 carriage; 17 presentation device; 21 operation detection unit; 22 drive command generation unit; 23, 23a sensor image generation unit; 24 composite image generation unit; 25, 32 communication unit; 31 transparent contact panel; 33 display; 50 attachment; 100, 100a, 100b, 100c remote control system.

## Claims

1. A remote control system comprising:
an edge device including a sensor;
an operation device to accept, as an operation on the edge device, a motion of an operator for causing the edge device to perform a motion;
a camera to capture a camera image that is an image including an area around the edge device;
a sensor image generation unit to generate, using a detection value detected by the sensor, a sensor image that is an image according to the detection value;
an operation detection unit to detect an operation position that is a position in the camera image corresponding to the operation;
a composite image generation unit to determine, based on the operation position, a position at which the sensor image is to be superimposed on the camera image, and to generate a composite image by superimposing the sensor image on the camera image at the position determined; and
a display device to display the composite image.

2. The remote control system according to claim 1, wherein
the operation is performed by a finger of the operator,
the operation device is a transparent contact panel integrated with the display device,
operation information accepted by the operation device includes position information indicating a position at which the finger is brought into contact with the transparent contact panel in the operation, and
the operation detection unit determines a position at which the sensor image is to be superimposed on the camera image using the position information.

3. The remote control system according to claim 2, wherein
the operation detection unit sets, as the operation position, the position in the camera image corresponding to the position indicated by the position information, and
the composite image generation unit superimposes the sensor image on the camera image such that the sensor image is superimposed at a position including the operation position.

4. The remote control system according to claim 3, wherein
the operation detection unit sets, as the operation position, the position indicated by the position information, and
the composite image generation unit superimposes the sensor image on the camera image such that a center of the sensor image is at the operation position.

5. The remote control system according to claim 3, wherein
the operation detection unit sets, as the operation position, the position indicated by the position information, and
the composite image generation unit superimposes the sensor image on the camera image such that a center of the sensor image is at a position offset upward from the operation position.

6. The remote control system according to claim 3, wherein
the operation is performed by bringing an attachment worn on the finger of the operator into contact with the transparent contact panel, and
the composite image generation unit superimposes the sensor image on the camera image such that a center of the sensor image is at the operation position.

7. The remote control system according to claim 1, wherein
the operation is performed by a motion part that is a body part of the operator,
the operation device includes a device to capture an image of the operator,
operation information accepted by the operation device includes an image captured by the operation device, and
the operation detection unit determines the operation position using a position of the motion part in the operation information accepted by the operation device.

8. The remote control system according to any one of claims 1 to 7, wherein
the edge device includes a hand capable of gripping a target,
the sensor is attached to the hand, and
the operation includes a grip-related operation that is an operation for causing the hand to grip the target.

9. The remote control system according to claim 8, wherein the sensor includes a force tactile sensor.

10. The remote control system according to claim 8, wherein the sensor includes a temperature sensor.

11. The remote control system according to any one of claims 8 to 10, wherein
the operation is performed by a finger of the operator,
the operation device is a transparent contact panel integrated with the display device,
operation information accepted by the operation device includes position information indicating a position at which the finger is brought into contact with the transparent contact panel in the operation, and
when two fingers of the operator touch the transparent contact panel simultaneously, the operation detection unit determines that the operation by the operator is the grip-related operation, and determines, using the position information in the grip-related operation, a position at which the sensor image is to be superimposed on the camera image.

12. The remote control system according to any one of claims 1 to 11, wherein
the edge device includes a moving mechanism for moving, and
the sensor includes a sensor to detect a driving force for driving the moving mechanism.

13. The remote control system according to any one of claims 1 to 12, comprising
a drive command generation unit to generate a drive command for the edge device, wherein
the drive command generation unit generates a drive command according to operation information accepted by the operation device, thereby synchronizing a motion of the edge device with the motion of the operator.

14. The remote control system according to any one of claims 1 to 13, wherein the composite image generation unit generates, using detection values acquired by a plurality of the sensors of the same type, images indicating a distribution of the detection values as the sensor images.

15. The remote control system according to any one of claims 1 to 14, wherein the composite image generation unit generates, using detection values acquired by a plurality of the sensors of different types, the sensor images including images individually representing the detection values of the respective types of the sensors.

16. The remote control system according to any one of claims 1 to 15, wherein
the edge device includes a collision sensor to detect a collision, and
when the edge device detects a collision using a detection result from the collision sensor, the edge device stops performing a motion.

17. The remote control system according to any one of claims 1 to 16, wherein the edge device includes a presentation device capable of displaying a detection value detected by the sensor.

18. A remote control method applied to a remote control system to remotely control an edge device including a sensor, the remote control method comprising:
a step of accepting, as an operation on the edge device, a motion of an operator for causing the edge device to perform a motion;
a step of capturing a camera image that is an image including an area around the edge device;
a step of generating, using a detection value detected by the sensor, a sensor image that is an image according to the detection value;
a step of detecting an operation position that is a position in the camera image corresponding to the operation;
a step of determining, based on the operation position, a position at which the sensor image is to be superimposed on the camera image, and generating a composite image by superimposing the sensor image on the camera image at the position determined; and
a step of displaying the composite image.
